# EUROPEAN PATENT APPLICATION

(11) **EP 3 674 112 A1**
(43) Date of publication of application: **01.07.2020**
(21) Application number: 19208297.2
(22) Date of filing: 11.11.2019
(51) Int. Cl.: B60G 7/00, F16B 17/00, B62D 7/20

(54) **A CONNECTION ARM**

(30) Priority: 31.12.2018 TR 201821268
(71) Applicant: Ditas Dogan Yedek Parca Imalat Ve Teknik Anonim Sirketi, Nigde (TR)
(72) Inventor: TUNC, OZKAN, Nigde (TR)
(74) Representative: Kaya, Erdem

(57) **Abstract**

The present invention is at least one connection arm (1) particularly for use in vehicles and having at least one shaft (21) with at least one undulated form (212) around it and at least one connection element (10) connected to said shaft (21). The Improvement of the present Invention Is that the shaft (21), having said undulated form (212), has at least one knurled form (212) for preventing rotation of said shaft (21) around its own axis.

## Description

### TECHNICAL FIELD

The present invention relates to at least one connection arm particularly for use in vehicles and having at least one shaft with at least one undulated form around it and at least one connection element connected to said shaft.

### PRIOR ART

The part, used in transferring the movement, received from the driver, to the wheels, is called connection arm in steering and suspension systems of vehicles, particularly, of heavy commercial vehicles. Connection arms are known in the literature with names drawing arm/connection, V connection, rod arm, rod head, etc. Connection arms basically comprise three parts. These are the body, the connection arm and the joint The joint is positioned inside the body, and the body is positioned in the connection arm.

Because of vehicle-top dynamic in the combination of the connection arm and the body, the following problems are faced:
- Applying of load, which is greater than the calculated loads, to the body.
- Increasing of the momentum force at the combination location of the connection arm and the body,
- Insufficiency of the hot clamping operation in the present art.

In the literature, in the patent with number CN1958319, usage of undulated (bent, grooved) form in the connection arm and body embodiment is disclosed. In said patent, the undulated form is used for providing joining related to the hot press between the connection arm and the body.

It has been detected that momentum occurs because of the rotation in the body axis under instantaneous loadings coming from the road at the usage position on the vehicle. Due to this momentum, the verticalness of the body is deteriorated.

As a result, because of all of the abovementioned problems, an improvement is required in the related technical field.

### BRIEF DESCRIPTION OF THE INVENTION

The present invention relates to a connection arm, for eliminating the above mentioned disadvantages and for bringing new advantages to the related technical field.

An object of the present invention is to provide a connection arm for preventing deformation of the connection body in instantaneous force loadings.

In order to realize the abovementioned object and the objects which are to be deducted from the detailed description below, the present invention is at least one connection arm particularly for use in vehicles and having at least one shaft with at least one undulated form around it and at least one connection element connected to said shaft Accordingly, the shaft having said undulated form, has at least one knurled form for preventing rotation of said shaft around its own axis. Thus, the rotation of the shaft inside the connection element around its own axis is prevented.

In a possible embodiment of the present invention, said knurled form is placed in a sequenced manner with the undulated form on the shaft. Thus, the shaft shows higher resistance in case of instantaneous loadings.

In a possible embodiment of the present invention, the knurled form has cylindrical shape on the shaft. Thus, the cylindrical gaps brought by the undulated form increases the resistance of the shaft against rotation.

In a possible embodiment of the present invention, the knurled form is positioned in an angled manner on the shaft. Thus, the undulated form existing on the shaft prevents rotation of the shaft.

### BRIEF DESCRIPTION OF THE FIGURES

Figure 1 is a representative schematic view of the subject matter connection arm.
Figure 2 is a representative schematic view of a connection body positioned in the subject matter connection arm.

### DETAILED DESCRIPTION OF THE INVENTION

In this detailed description, the subject matter connection arm (1) is explained with references to examples without forming any restrictive effect only in order to make the subject more understandable.

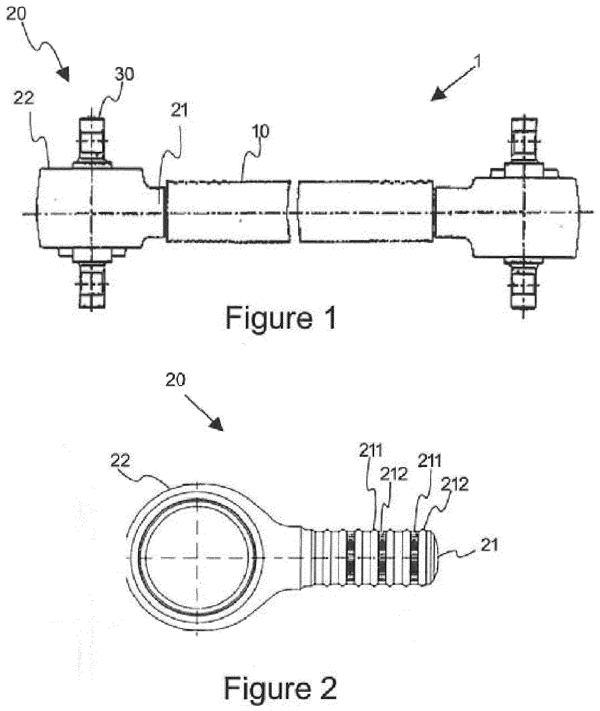

In Figure 1, a representative schematic view of at least one connection arm (1) is given. Accordingly, said connection arm (1) comprises at least one connection element (10) for use in steering system, in suspension system particularly in vehicles. Said connection element (10) has a cylindrical shape and can be connected to at least one connection body (20) from at least one side thereof.

In Figure 2, a representative top view of said connection body (20) is given. Accordingly, the connection body (20) has at least one joint bearing (22) connected to at least one shaft (21). Said joint bearing (22) has a hollow cylindrical shape and configured such that at least one joint (30) is positioned in its cylidrical shape. Said joint (30) has movement freedom inside the joint bearing (22) and it is positioned between points where the connection arm (1) is desired to be connected.

Said shaft (21) provides connection of the connection body (20) to the connection element (10). At least one undulated form (212) is positioned on the shaft (21) for providing connection by means of the connection element (10). Said undulated form (212) has a curved structure. Thanks to the undulated form (212), the shaft (21) is positioned at the connection element (10) and is prevented from removing therefrom. At least one knurled form (211) is positioned besides the undulated form (212) on the shaft (21). Said knurled form (211) forms cylindrical tabbed structure around the shaft (21). Thanks to this, the knurled form (211) prevents rotation of the shaft (21) around the own axis thereof inside the connection element (10). In a possible embodiment of the present invention, the knurled form (211) and the undulated form (212) are configured in pluralities of numbers cylindrically essentially in the vicinity of each other on the shaft (21), and in another embodiment of the present invention, it can also be configured in a manner making an angle with respect to the axis of the shaft (21). Moreover, in another possible embodiment of the present invention, there can be a predetermined distance between the undulated form (212) and the knurled form (211).

Thus, the rotation of the connection body (20) around the connection element (10) is prevented. Accordingly, because of the effect of momentum which occurs in instantaneous movements and stresses in vehicle wheel, the deformation of the shaft (21) inside the connection element (10) is prevented.

The protection scope of the present invention is set forth in the annexed claims and cannot be restricted to the illustrative disclosures given above, under the detailed description. It is because a person skilled in the relevant art can obviously produce similar embodiments under the light of the foregoing disclosures, without departing from the main principles of the present invention.

### REFERENCE NUMBERS

1 Connection arm
10 Connection element
20 Connection body
21 Shaft
211 Knurled form
212 Undulated form
22 Joint bearing
30 Joint

## Claims

1. At least one connection arm (1) particularly for use in vehicles and having at least one shaft (21) with at least one undulated form (212) around it and at least one connection element (10) connected to said shaft (21), wherein the shaft (21), having said undulated form (212), has at least one knurled form (211) for preventing rotation of said shaft (21) around its own axis.

2. The connection element (10) according to claim 1. wherein said knurled form (211) is placed in a sequenced manner with the undulated form (212) on the shaft (21).

3. The connection element (10) according to claim 1, wherein the knurled form (211) has cylindrical shape on the shaft (21).

4. The connection element (10) according to claim 1. wherein the knurled form (211) is positioned in an angled manner on the shaft (21).
